# EUROPEAN PATENT APPLICATION

(11) **EP 4 838 415 A1**
(43) Date of publication of application: **11.11.2026**
(21) Application number: 26173353.9
(22) Date of filing: 20.04.2026
(51) Int. Cl.: G06N 3/0455, G06N 3/09, G06N 3/0475

(54) **ARTIFICIAL INTELLIGENCE NETWORK MODEL FOR DATA GENERATION, AND TRAINING METHOD THEREFOR AND APPARATUS**

(30) Priority: 06.05.2025 CN 202510581196
(71) Applicant: Robert Bosch GmbH, 70442 Stuttgart (DE)
(72) Inventor: WU, Youjia, Shanghai, 200335 (CN); ZHANG, Kaixuan, Shanghai, 200335 (CN)

(57) **Abstract**

The present invention relates to method for generating data based on an artificial intelligence network model, comprising: sampling in an encoded latent space of a data pair consisting of first data and second data to obtain a latent space sample of the data pair, wherein the first data and second data of the data pair have a functional correspondence, and one of the first data and second data of the data pair is masked; decoding the latent space sample of the data pair using an artificial intelligence network model to generate an output data pair consisting of first output data and second output data; and filtering the output data pair to obtain a target data pair in which the first output data or the second output data satisfies a predetermined condition.

## Description

### Technical Field

In summary, the present invention relates to artificial intelligence technology, and more specifically to an artificial intelligence network model for data generation and a training method therefor.

### Background

Artificial intelligence (AI) technology is developing rapidly. AI network models can generate content that matches input conditions or instructions through training and learning from large amounts of data.

Different types of AI network models possess unique advantages, and their applications are becoming increasingly widespread. With the development of AI network models, it may be desirable to apply them to solve problems involving complex functional relationships or changing patterns in daily work and life. For example, in scenarios involving dynamic changes in temperature fields, such as heat dissipation design and ambient temperature detection, it is often necessary to solve heat conduction equations. Similarly, in scenarios involving propagation of sound waves or mechanical vibrations, such as sound insulation engineering and structural seismic resistance, it is often necessary to solve wave equations. Furthermore, in scenarios involving simulation of group behavior, such as market bubble prediction, it may be necessary to solve reaction-diffusion equations. Equations used to describe dynamic changes of variables such as temperature fields, sound fields, and market bubbles typically contain unknown functions and their partial derivatives. Solving these problems using traditional mathematical methods is often very difficult or even impossible. Therefore, there is a need for AI network models and their training methods to solve such problems in daily work and life.

### Summary of the Invention

A brief description of one or more aspects according to the present disclosure is provided below in order to provide a basic understanding of these aspects. The present disclosure is not a broad overview of all aspects, nor is it intended to identify the key elements of all aspects or delineate the scope of any or all aspects. Its sole purpose is to present some concepts of one or more aspects in a simplified form as a preamble to the more detailed description that follows.

According to one aspect of the present disclosure, a method for generating data based on an artificial intelligence network model comprises: sampling in an encoded latent space of a data pair consisting of first data and second data to obtain a latent space sample of the data pair, wherein the first data and second data of the data pair have a functional correspondence, and one of the first data and second data of the data pair is masked; decoding the latent space sample of the data pair using an artificial intelligence network model to generate an output data pair consisting of first output data and second output data; and filtering the output data pair to obtain a target data pair in which the first output data or the second output data satisfies a predetermined condition.

According to one aspect of the present disclosure, an apparatus for generating data based on an artificial intelligence network model comprises: a memory; and at least one processor coupled to the memory and configured to perform the following operations: sample in an encoded latent space of a data pair consisting of first data and second data to obtain a latent space sample of the data pair, wherein the first data and second data of the data pair have a functional correspondence, and one of the first data and second data of the data pair is masked; decode the latent space sample of the data pair using an artificial intelligence network model to generate an output data pair consisting of first output data and second output data; and filter the output data pair to obtain a target data pair in which the first output data or the second output data satisfies a predetermined condition.

According to one aspect of the present disclosure, a computer program product for generating data based on an artificial intelligence network model comprises computer-executable instructions that, when executed, cause one or more processors to perform the following operations: sample in an encoded latent space of a data pair consisting of first data and second data to obtain a latent space sample of the data pair, wherein the first data and second data of the data pair have a functional correspondence, and one of the first data and second data of the data pair is masked; decode the latent space sample of the data pair using an artificial intelligence network model to generate an output data pair consisting of first output data and second output data; and filter the output data pair to obtain a target data pair in which the first output data or the second output data satisfies a predetermined condition.

It should be noted that the above one or more aspects include the following detailed description and features that are specifically recorded in the Claims. The following specification and accompanying drawings detail some of the exemplary features from a variety of aspects. These features merely indicate a variety of ways in which the principles of various aspects may be implemented, and the present disclosure is intended to include all of these aspects and their equivalents.

### Brief Description of the Drawings

The following drawings describe various examples of the present disclosure for illustrative purposes only. Those skilled in the art will readily recognize from the following description that alternative examples of the methods and structures disclosed herein may be achieved without departing from the spirit and principles disclosed herein.
FIG. 1 illustrates an example of training an artificial intelligence network model according to an embodiment of the present disclosure.
FIG. 2 illustrates an example of generating data based on an artificial intelligence network model according to an embodiment of the present disclosure.
FIG. 3 is a flowchart of a method for training an artificial intelligence network model according to an embodiment of the present disclosure.
FIG. 4 is a block diagram of an apparatus for training an artificial intelligence network model according to an embodiment of the present disclosure.
FIG. 5 is a flowchart of a method for generating data based on an artificial intelligence network model according to an embodiment of the present disclosure.
FIG. 6 is a block diagram of an apparatus for generating data based on an artificial intelligence network model according to an embodiment of the present disclosure.

To facilitate understanding, identical reference signs have been used wherever possible to designate identical elements common to the accompanying drawings. In the absence of specific description to the contrary, elements disclosed in one aspect may be beneficially used in other aspects.

### Detailed Description of the Embodiments

In the following description, numerous specific details are set forth to provide a thorough understanding of the examples of the present invention. However, those skilled in the relevant art will recognize that the present invention can be practiced without one or more of the specific details, or by using alternative methods, components, etc., to practice the present invention. In some instances, well-known structures and operations are not shown or described in detail to avoid unnecessarily obscuring the present invention.

Problems we encounter in our daily life and work that involve complex functional relationships or changing patterns, such as those related to physical phenomena like heat conduction, fluid mechanics, and structural mechanics in physics, can usually be classified as direct problems and inverse problems. Direct problems refer to predicting how a system will evolve over time or under certain operating conditions, given a set of initial parameters or boundary conditions. For example, a direct problem might involve solving for the temperature distribution at future times based on a given initial temperature distribution, boundary heat flux conditions, and the thermal conductivity of the material. Inverse problems might involve inferring unknown parameters or initial boundary conditions from the output results. For example, an inverse problem might involve inferring the thermal conductivity of a material based on the temperature distribution. The input of a direct problem can be the output of an inverse problem, and vice versa. Direct and inverse problems are crucial in science and engineering, but due to their complexity, they often require interdisciplinary mathematical tools and computational techniques to solve.

In some cases, the direct and inverse problems in mathematics can be solved with precise numerical results using partial differential equations (PDEs). However, due to the mathematical complexity of PDEs (such as nonlinearity and high dimensionality), physical multi-scale nature, computational resource limitations, and uncertainties in practical applications, PDEs are difficult to solve with precise numerical results in some scenarios, or the solution process consumes a large amount of computational resources and incurs a huge cost.

The present disclosure utilizes an artificial intelligence network model to handle tasks related to solving both direct and inverse problems, and provides a method for training such a model and using the artificial intelligence network model to generate data for solving both direct and inverse problems. By employing the training method provided in the present disclosure, a single artificial intelligence network model can generate data for both direct and inverse problems. This improves the efficiency of the computer system and reduces the amount of data stored within the computer system for the artificial intelligence network models, compared to training and using different artificial intelligence network models separately for solving direct and inverse problems.

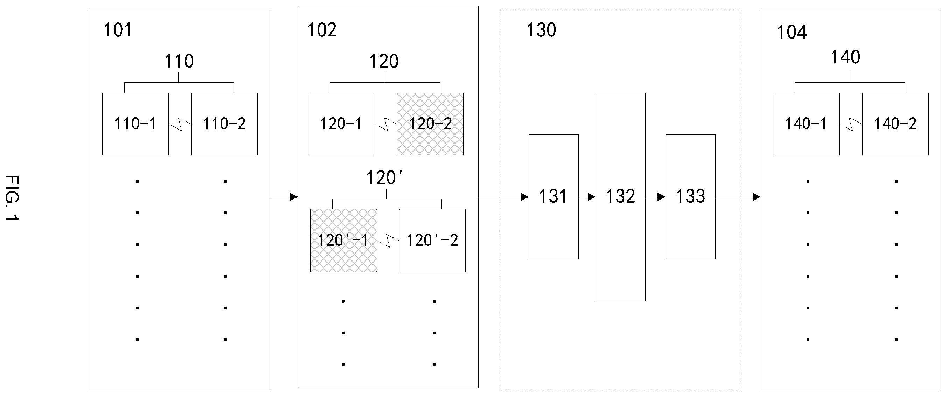

FIG. 1 illustrates an example of training an artificial intelligence network model according to an embodiment of the present disclosure. Specifically, FIG. 1 shows a training dataset 101, a training data pair 110, a masked dataset 102, a masked data pair 120, an artificial intelligence network model 130, a reconstructed dataset 104, and a reconstructed data pair 140. The training dataset 101 in FIG. 1 may comprise multiple training data pairs 110, such as the training data pair 110 shown in FIG. 1 and multiple training data pairs with the same data structure (not shown). The training data pair 110 comprises a first training data 110-1 and a second training data 110-2 having a functional correspondence. This functional correspondence can be used to describe the corresponding direct and inverse problems. Although only one training data pair is shown in FIG. 1, the training dataset 110 may comprise multiple training data pairs, and the first and second training data in each training data pair are paired. The data in FIG. 1 may include, but is not limited to, text data, image data, audio data, video data, etc. This data can also be collectively referred to as multimedia data.

In some cases, the first training data 110-1 may comprise data belonging to the first channel, and the second training data 110-2 may comprise data belonging to the second channel. In one example, the first channel may represent a known input (e.g., an initial parameter set or boundary conditions) in the direct problem, and the second channel may represent an unknown output (e.g., a prediction result) in the direct problem. In another example, the first channel may represent an unknown output (e.g., an initial parameter set or boundary conditions) in the inverse problem corresponding to the direct problem, and the second channel may represent a known input (e.g., a prediction result) in the inverse problem. In other words, data belonging to the first channel may represent either an input in the direct problem or an output in the inverse problem, and data belonging to the second channel may represent either an output in the direct problem or an input in the inverse problem. Therefore, by pairing or combining the first training data 110-1 and the second training data 110-2, a training dataset 101 comprising multiple training data pairs 110 can be generated, thereby obtaining a training dataset for training an artificial intelligence network model capable of solving both direct and inverse problems.

For example, in the industrial production and product design of fuel cells, the design parameters of the flow channels in the fuel cell electrode plates and the physical parameters of the flow field are a pair of data with a functional correspondence. In this example, the direct problem may involve solving for the physical parameters of the flow field using the known design parameters of the flow channels, and the inverse problem may involve solving for the design parameters of the flow channels using the known physical parameters of the flow field. In this example, the first training data 110-1 may include, but is not limited to, the design parameters of the flow channels (e.g., geometric parameters, including flow channel dimensions, ridge width, and flow channel length), and the second training data 110-2 may include, but is not limited to, the physical parameters of the flow field (e.g., flow parameters, including pressure drop, gas velocity, and flow distribution uniformity). In one example, the training dataset 101 may comprise multiple training data pairs consisting of multiple flow channel design parameters and corresponding multiple flow field physical parameters, wherein one flow channel is paired with one flow field. Although the flow channels and flow fields of fuel cells are used as examples above, the present disclosure is not limited to these. For example, in the heat conduction, the first training data may include, but is not limited to, the design parameters of the object (e.g., geometry, thermal conductivity, etc.), and the second training data may include, but is not limited to, the physical parameters of the object after heating (e.g., temperature field distribution).

Referring again to FIG. 1, either the first or second training data in the training data pair may be masked to obtain a masked data pair. As shown in FIG. 1, the masked data pair 120 comprises the unmasked first training data 120-1 and the masked second training data 120-2, wherein the unmasked first training data 120-1 in the masked data pair 120 is the same as the first training data 110-1 in the training dataset 101. The masked data pair 120' comprises the masked first training data 120'-1 and the unmasked second training data 120'-2. In one embodiment, the masked data pairs 120' and 120 may be obtained by masking the first training data 110-1 and the second training data 110-2 in the same training data pair 110, respectively. In another embodiment, a first training data of a portion of the training data pairs in the training dataset may be masked to obtain a masked data pair of the first training data (e.g., masked data pair 120'), and a second training data of another portion of the training data pairs in the training dataset may be masked to obtain a masked data pair of the second training data (e.g., masked data pair 120). Therefore, the masked dataset 102 comprises both the masked data pairs of the first and second training data.

In one example, if training dataset 101 comprises M training data pairs 110 (M is an integer greater than 1), masked dataset 102 can comprise corresponding M masked data pairs 120. Masking the first training data 110-1 or the second training data 110-2 of training data pair 110 involves randomly masking either the first training data 110-1 or the second training data 110-2, thus obtaining M masked data pairs 110. That is, whether the first or second training data of a training data pair in training dataset 101 is masked can be random. This simplifies the design of the masking while ensuring that the masked dataset 102 comprises both multiple masked data pairs with the first training data masked and multiple masked data pairs with the second training data masked, with both numbers being roughly equal.

In one example, the data pairs used for one iteration of training the artificial intelligence network model 130 may comprise all training data pairs in training dataset 101. In another example, the training dataset 101 may comprise multiple batches of training data pairs used for multiple iterations of training the artificial intelligence network model 130. In this example, the first training data of a batch of training data pairs in the training dataset 101 may be masked to generate data pairs with the first training data masked; and the second training data 110-2 of the same batch of training data pairs 110 in training dataset 101 may be masked to generate data pairs with the second training data masked. That is, by masking the first and second training data of each training data pair in a batch of training data pairs, two masked data pairs may be generated from a training data pair, one with the first training data masked and the other with the second training data masked. That is, a batch of masked datasets generated based on a batch of training data pairs (batch size is N, wherein N is an integer greater than one) may comprise 2N masked data pairs. In this way, the training data pairs in the training dataset can be utilized more fully, thereby enabling the artificial intelligence network model to be trained more thoroughly and improving the robustness of data processing.

In one example, masking the first training data 110-1 or the second training data 110-2 in the training data pair 110 may comprise replacing the first training data 110-1 or the second training data 110-2 with a value of random noise, a value of a normal distribution, or a preset value. For example, the value of random noise may include Gaussian white noise (N (0, 1)), and the value of the normal distribution may include a normal distribution between -1 and 1 (U (-1, 1)). In one example, the preset value may include zero, and the masking action may comprise masking by setting the corresponding training data to all zeros.

Referring back to FIG. 1, after generating the masked data pair 120, the artificial intelligence network model 130 is trained by inputting the masked data pair 120 into the artificial intelligence network model 130 and optimizing the loss between the reconstructed data pair 140 output by the artificial intelligence network model 130 and the training data pair 110. That is, the training method provided in the present disclosure is a supervised training method. Depending on the design of different loss functions, optimizing the loss between the reconstructed data pair and the training data pair may comprise minimizing or maximizing the loss function. As shown in FIG. 1, in one embodiment, the artificial intelligence network model 130 may comprise an encoder 131 and a decoder 133.

In one example, the artificial intelligence network model 130 may be trained using a training dataset 101 and a masked dataset 102. During training, an encoder 131 may be used to encode the masked data pair 120 to obtain a compressed low-dimensional representation of the masked data pair 120 in the latent space 132. A decoder 133 may be used to decode the compressed low-dimensional representation of the masked data pair 120 to generate a reconstructed data pair 140. The reconstructed data pair 140 comprises a reconstructed first training data 140-1 and a reconstructed second training data 140-2. Since the masked dataset 102 comprises the masked data pairs with both the first and second training data masked, the latent space 132 is shared for solving both the direct and inverse problems. The loss between the reconstructed data pair 140 and the training data pair 110 may be calculated, and the model parameters of the artificial intelligence network model may be adjusted based on the calculated loss. In one example, the reconstructed first training data 140-1 is similar to, but not exactly the same as, the first training data 110-1, the reconstructed second training data 140-2 is similar to, but not exactly the same as, the second training data 110-2. The difference between the reconstructed training data and the original training data is acceptable to the design requirements. In one example, during training, if the loss meets a preset threshold, the training process ends. If the loss does not meet the threshold, the above training process is repeated iteratively to train the artificial intelligence network model after adjusting the model parameters until the loss meets the threshold. In each iteration of training, the artificial intelligence network model 130 may be trained using all training data pairs, or it may be trained using a batch of training data pairs. In one example, the training data pair 110 may comprise structured data (e.g., numerical data), and the reconstructed data pair 140 may comprise corresponding structured data (e.g., numerical data). In one example, the training data pair 110 may comprise text data, and the reconstructed data pair 140 may comprise corresponding text data, wherein the artificial intelligence network model 130 may convert the text into word vectors. In one example, the training data pair 110 and the reconstructed data pair 140 may comprise image data, such as object structure diagrams, flow channel diagrams, heat distribution diagrams, flow field distribution diagrams, etc.

In one embodiment, the artificial intelligence network model 130 may have a variational autoencoder (VAE) architecture. The VAE architecture comprises an encoder (e.g., a portion of the encoder side *q_{ϕ}*(z|x)), a latent space, and a decoder (e.g., a portion of the decoder side *p_{θ}*(x|z)). The encoder side *q_{ϕ}*(z|x) maps the original data point x to a compressed low-dimensional representation (e.g., a low-dimensional vector z) in the latent space, while the decoder side *p_{θ}*(x|z) maps the sample z in the latent space to samples in the original data distribution. The low-dimensional vector z may be normalized to a normal distribution (N (0, 1)). In this example, the loss comprises a reconstruction loss between the reconstructed data pair 140 and the training data pair 110, a KL loss (Kullback-Leibler Divergence Loss), and a physical loss. The loss may be represented by the following equation: $L = {L}_{recons} + α \times {L}_{KL} + β \times {L}_{Physical}$ Equation (1) wherein, 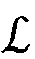 represents the loss, 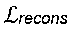 represents the reconstruction loss, 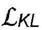 represents the KL loss, 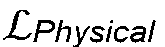 represents the physical loss, and *α* and *β* can be parameters representing the weights of the KL loss and the physical loss, respectively.

The reconstruction loss may comprise: the mean squared error (MSE) between the first training data and the reconstructed first training data, and the MSE between the second training data and the reconstructed second training data. The KL loss is a key metric measuring the difference between the latent variable distribution of the encoder output and a pre-defined prior distribution, and is used to constrain the structure of the latent space 132, ensuring the interpretability and diversity of the generated data. The physical loss may comprise the difference between the correlation function of the training data pair and the correlation function of the reconstructed data pair. The correlation function of the training data pair reflects the functional correspondence between the first and second training data of the training data pair, and the correlation function of the reconstructed data pair reflects the functional correspondence between the first and second reconstructed data of the training data pair. In one embodiment, the physical loss can be represented by the following equation: ${L}_{Physical , θ , ϕ} \left(x\right) = D \left[{\hat{u}}_{θ , ϕ}\left(x\right), {\hat{a}}_{θ , ϕ}\left(x\right)\right] - D \left[u, a\right]$ Equation (2) wherein, the correlation function of the training data pair can be represented by *D*[*u*, *a*], wherein *u* represents the first training data as the ground truth, and *a* represents the second training data as the ground truth. The correlation function of the reconstructed data pair can be represented by *D*[*û_{θ}*,*_{ϕ}*(x),*â_{θ}*,*_{ϕ}*(x)], wherein *û_{θ}*,*_{ϕ}*(x) represents the reconstructed first training data, and *â_{θ}*,*_{ϕ}*(x) represents the reconstructed second training data.

In one example, the functional correspondence between the first and second training data can be represented by the correlation function *D*[*u*, *a*]. In one example, the first training data 110-1 and the second training data 110-2 in the training data pair 110 are known truth values, and the first training data 110-1 and the second training data 110-2 can have the following functional correspondence: $D \left[u, a\right] = 0$ Equation (3) In this case, the functional correspondence is associated with the physical loss, and the physical loss can be simplified to the following equation: ${L}_{Physical , θ , ϕ} \left(x\right) = D \left[{\hat{u}}_{θ , ϕ}\left(x\right), {\hat{a}}_{θ , ϕ}\left(x\right)\right]$ Equation (4)

In certain cases, when the physical loss 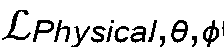 (x) equals zero, the resulting reconstructed data pair 140 may perfectly match the causal relationship between the input and output of the problem to be solved, whether it's the direct or inverse problem. In some cases, the physical loss 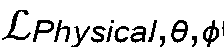 (x) may not be zero. In such cases, the weight *β* of the physical loss can be appropriately adjusted (e.g., increased or decreased) to obtain results that better match the correlation function, thus avoiding unnecessary computational resources or overfitting. Introducing physical loss can make the generated reconstructed data pairs more accurate.

Although the artificial intelligence network model 130 described above is an example using the VAE architecture, the artificial intelligence network model 130 in the present disclosure can also be a variant of VAE, such as WAE (Wasserstein AutoEncoder) or IWAE (Importance Weighted AutoEncoder). Using the VAE architecture or its variants allows for the rapid generation of reconstructed data pairs without the need for multiple denoising steps before generating reconstructed data, as is done in diffusion models, and avoids the latency caused by guiding the generation process in each denoising step.

In one example, where the training data pair 110 and the reconstructed data pair 140 comprise image data, the loss may also comprise a Fast Fourier Transform (FFT) loss, which comprises the MSE between the FFT-processed training data pair and the FFT-processed reconstructed data pair. In this example, the FFT loss can be expressed by the following equation: ${L}_{FFT , θ , ϕ} \left(x\right) = {\left‖F\left(x\right)-F\left({\hat{x}}_{θ , ϕ}\left(x\right)\right)\right‖}^{2}$ Equation (5) wherein x represents the training data pair, x̂ *_{θ}*,*_{ϕ}*(x) represents the reconstructed data pair, and 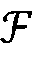 --(.) represents performing a Fast Fourier Transform on the variables therein. In this example, the FFT loss is obtained by first performing an FFT on the training data pair and then performing an FFT on the corresponding reconstructed data pair, and then calculating the MSE between the two FFT results.

In this example, the loss between the training data pair and the reconstructed data pair can be expressed by the following equation: $L = {L}_{recons} + α \times {L}_{KL} + β \times {L}_{Physical} + γ \times {L}_{FFT}$ Equation (6) wherein 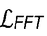 represents the FFT loss, and *γ* can be a parameter representing the weights of the FFT loss.

In image data processing using the VAE architecture, reconstruction loss typically focuses more on low-frequency information while neglecting high-frequency information, resulting in blurry reconstructed images. The present disclosure improves the global approximation accuracy of reconstructed data pairs by introducing FFT loss during image data training, enabling the artificial intelligence network model 130 employing the VAE architecture or its variants to generate sharper images while considering both high-frequency and low-frequency information. By introducing both physical loss and FFT loss, the artificial intelligence network model 130 employing the VAE architecture or its variants can leverage a hybrid supervised and self-supervised training strategy to enhance the data generation results.

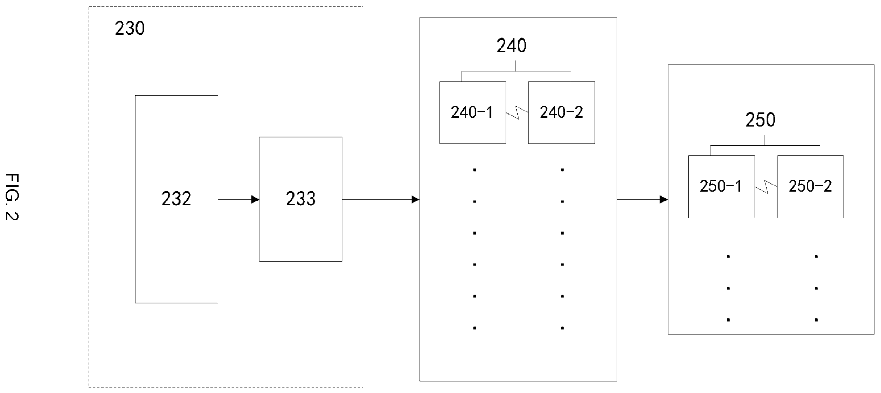

FIG. 2 illustrates an example of generating data based on an artificial intelligence network model according to an embodiment of the present disclosure. FIG. 2 shows an artificial intelligence network model 230, an output data pair 240, and a target data pair 250. The artificial intelligence network model 230 comprises a latent space 232 and a decoder 233. As shown in FIG. 2, the artificial intelligence network used to generate data in the present disclosure may not comprise the encoder 131 comprised in the artificial intelligence network 130 during the training phase, as shown in FIG. 1, during the data generation phase. The output data pair 240 may comprise a first output data 240-1 and a second output data 240-2. The first and second output data essentially satisfy the complex functional relationships or variation patterns of certain problems encountered in daily life and work, i.e., their errors can meet the design requirements. The target data pair 250 may comprise a first target data 250-1 and a second target data 240-2. The output data pair 240 may comprise multiple candidate data pairs of the target data pair 250. The target data pair 250 can be a data pair in which the generated output data pair 240 is filtered and a first output data and/or a second output data that meets a predetermined condition is determined.

The artificial intelligence network model 230 in FIG. 2 is trained using the same method as the artificial intelligence network model 130 in FIG. 1, and the training process will not be described in detail here. In one example, the latent space 230 is an encoded latent space of the data pair consisting of first data and second data. The distribution of the data pair in the latent space is learned by the artificial intelligence network model during training. The first data may correspond to the first training data in the training process described in FIG. 1, and the second data may correspond to the second training data in the training process described in FIG. 1. The first data and the second data have a functional correspondence, and one of the first data and the second data is masked, i.e., one of the first data and the second data is masked data. The masked data may be noisy data, normally distributed data, or other predetermined values (e.g., all zero values).

In one example, a latent space sample z is obtained by sampling noise ε from a standard normal distribution (N (0, 1)) in the latent space 232, and then adjusting the noise ε using the mean µ and variance σ² of the normal distribution in the latent space, wherein z = µ + σ⊙ε. The mean µ and variance σ² are learned during the training of the artificial intelligence network model using the training data pair. Since such sampling comes from random latent space vectors and no data is input to the artificial intelligence network model 230 during data generation, it can be called prior sampling. The sampled latent space sample may be decoded by the decoder 233 to generate an output data pair 240 consisting of a first output data 240-1 and a second output data 240-2. Although only one output data pair 240 is shown in FIG. 2, multiple output data pairs 240 may be generated through multiple samplings in some cases.

In one example, the first data, the first output data, and the first target parameter may comprise design parameters (e.g., the geometry and dimensions of the flow channel), and the second data, the second output data, and the second target parameter may comprise operating state parameters corresponding to the design parameters (e.g., physical field parameters such as temperature field distribution or force field distribution).

In one example, an output data pair can be filtered based on how well the first and second output data of the output data pair conform to a functional correspondence. In one example, the functional correspondence can be represented by the correlation function *D*[*uₒᵤₜₚᵤₜ*, *aₒᵤₜₚᵤₜ*], wherein *uₒᵤₜₚᵤₜ* represents the first output data and *aₒᵤₜₚᵤₜ* represents the second output data.

For example, the first and second output data can be substituted into *D*[*uₒᵤₜₚᵤₜ*, *aₒᵤₜₚᵤₜ*] to calculate the numerical result. Ideally, the following result can be obtained: $D \left[{u}_{output}, {a}_{output}\right] = 0$ Equation (7)

In one example, based on the determination that the first and second output data conform to a functional correspondence-for example, if the correlation function value of the output data pair is less than or equal to a predetermined condition (i.e., the degree of conformity to the functional correspondence is high)-the output data pair can be retained to obtain a target data pair where either the first or second output data satisfies the predetermined condition. In another example, based on the determination that the first and second output data do not conform to a functional correspondence-for example, if the correlation function value of the output data pair is greater than a predetermined condition (i.e., the degree of conformity to the functional correspondence is low)-the output data pair can be discarded.

Specifically, the numerical result of the correlation function reflecting the functional correspondence can be set to be less than or equal to a certain threshold value *τ*. For example, the correlation function can be set as: $D \left[{u}_{output}, {a}_{output}\right] \leq τ$ Equation (8) In this example, the degree to which the first and second output data conform to the functional correspondence can be determined based on whether the correlation function of the first and second output data satisfies the threshold value. That is, if the numerical result obtained by substituting the first and second output data into *D*[*uₒᵤₜₚᵤₜ*, *aₒᵤₜₚᵤₜ*] is less than or equal to the threshold value *τ*, then the first and second output data can be considered to conform to the functional correspondence. In this way, a target data pair that better meets the design requirements can be obtained more quickly with less computing resources.

In one example, the first and second output data can comprise parameters of multiple types. A subset of parameters from either the first or second output data can be selected, and the output data pair can be filtered based on whether the values of the selected subset of parameters fall within a threshold range of the target value. In one example, the output data pair can be filtered based on algorithms such as brute force searching, optimization techniques, or surrogate classifiers.

In the fuel cell electrode plate design example, the first output data 240-1 may include, but is not limited to, design parameters of the electrode plate flow channel (e.g., geometric parameters, including flow channel dimensions, ridge width, and flow channel length), and the second output data 240-2 may include, but is not limited to, the physical parameters of the flow field under predicted electrode plate operating conditions (e.g., flow parameters, including pressure drop, gas velocity, and flow distribution uniformity). The flow channel length parameter in the first output data 240-1 or the pressure drop parameter in the second output data 240-1 can be selected first. Then, it is determined whether the flow channel length parameter is less than the maximum length required by the design or whether the pressure drop parameter is less than the pressure drop threshold to determine whether the output data pair 240 meets the requirements. If the selected parameters meet the requirements, the output data pair 240 can be retained; otherwise, it can be discarded.

Although FIG. 2 shows a target data pair 250, this disclosure is not limited thereto. For example, multiple output data pairs 240 can also be filtered, and all output data pairs that meet the filtering criteria can be retained as target data pairs. In one example, the filtering operation can also be performed immediately after each output data pair is generated to obtain the target data pair more quickly.

In the example above, the trained artificial intelligence network model can directly output an output data pair as a candidate for a target data pair even when both the flow field data and the flow channel data are unknown. Therefore, by using the training method in FIG. 1 and the data generation method in FIG. 2, a single trained artificial intelligence network model can be used to solve both the direct and inverse problems, thereby improving the training efficiency of the model. Furthermore, compared to training and deploying artificial intelligence network models separately for the direct and inverse problems, the single artificial intelligence network model disclosed in the present invention reduces the software and hardware resources required during training and deployment.

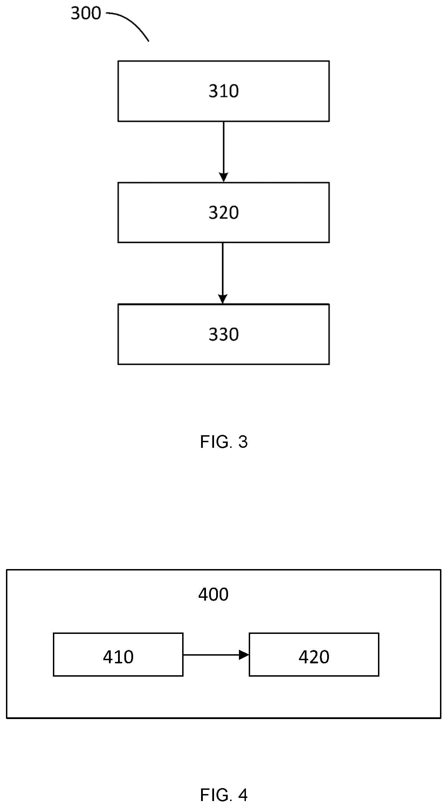

FIG. 3 is a flowchart of a method 300 for training an artificial intelligence network model according to an embodiment of the present disclosure. The method 300 can be performed by a computing device such as a (cloud) server, an edge computing platform, or a mobile phone, computer, or by components of such computing devices. Although some steps of the method 300 have been exemplarily described below in conjunction with FIG. 1, the method 300 is not limited to the example of FIG. 1.

At step 310, the method 300 may generate a training dataset comprising multiple training data pairs, wherein the training data pairs may comprise first training data and second training data having a functional correspondence. This functional correspondence can be used to describe the variation patterns between the first and second training data based on causal relationships, etc. This functional correspondence is related to the direct and inverse problems in daily life and work to be solved. In one embodiment, generating a training dataset comprising multiple training data pairs may comprise pairing or coupling the first and second training data in the training data pairs.

At step 320, the method 300 may mask the first training data or the second training data of the training data pair to generate a masked data pair. The masked data pair may comprise a data pair with the first training data masked and a data pair with the second training data masked. The data pair with the first training data masked and the data pair with the second training data masked may be generated based on the same training data pair or based on different training data pairs.

In one embodiment, masking the first or second training data of a training data pair may comprise: replacing the first or second training data with values of random noise, normally distributed values, or preset values. In one embodiment, masking the first or second training data of a training data pair may comprise: randomly masking the first or second training data of the training data pair. In one embodiment, masking the first or second training data of a training data pair may comprise: masking the first training data of a batch of training data pairs in the training dataset to generate masked data pairs; and masking the second training data of a batch of training data pairs in the training dataset to generate masked data pairs.

At step 330, the method 300 may train the artificial intelligence network model by inputting masked data pairs into the artificial intelligence network model and optimizing the loss between the reconstructed data pairs output by the artificial intelligence network model and the training data pairs. That is, the parameters of the artificial intelligence network model are updated by causing the loss between the reconstructed data pairs output by the artificial intelligence network model and the training data pairs to converge or reach a threshold.

In one embodiment, the artificial intelligence network model may comprise an encoder and a decoder. In one embodiment, the artificial intelligence network model may comprise an artificial intelligence network model with a VAE architecture. In one embodiment, training the artificial intelligence network model may further comprise: encoding masked data pairs using the encoder to obtain a compressed low-dimensional representation of the masked data pairs in the latent space; decoding the compressed low-dimensional representation of the masked data pairs using the decoder to generate reconstructed data pairs, the reconstructed data pairs comprising reconstructed first training data and reconstructed second training data; calculating the loss between the reconstructed data pairs and the training data pairs; and adjusting the model parameters of the artificial intelligence network model based on the loss. The model parameters of the artificial intelligence network model are adjusted such that the loss between the reconstructed data pairs and the training data pairs tends to converge or meet a threshold.

In one embodiment, the loss may comprise a reconstruction loss between the reconstructed data pair and the training data pair, a Kullback-Leibler (KL) loss, and a physical loss. In one embodiment, the reconstruction loss comprises: the mean squared error (MSE) between the first training data and the reconstructed first training data, and the MSE between the second training data and the reconstructed second training data, wherein the physical loss comprises: the difference between the correlation function of the training data pair and the correlation function of the reconstructed data pair. In one embodiment, the training data pair and the reconstructed data pair comprise image data, and wherein the loss further comprises a Fast Fourier Transform (FFT) loss, the FFT loss comprising: the MSE between the FFT-processed training data pair and the FFT-processed reconstructed data pair.

FIG. 4 is a block diagram of an apparatus for training an artificial intelligence network model according to an embodiment of the present disclosure. As shown in FIG. 4, the apparatus 400 may comprise a memory 410 and at least one processor 420 coupled to the memory 410.

In one embodiment, the apparatus 400 may be an apparatus for training an artificial intelligence network model, such as a local server, cloud server, edge computing platform, or even a smartphone or computer with strong computing power. The apparatus 400 may comprise various modules for training the artificial intelligence network model, and the processor 420 may be configured to execute the method for training the artificial intelligence network model described above in conjunction with FIG. 1. For example, the processor 420 may be configured to: generate a training dataset comprising multiple training data pairs, the training data pairs comprising the first training data and the second training data having a functional correspondence; mask the first or second training data of the training data pairs to generate masked data pairs, the masked data pairs comprising the data pairs with the first and second training data masked; and train the artificial intelligence network model by inputting the masked data pairs into the artificial intelligence network model and optimizing the loss between the reconstructed data pairs output by the artificial intelligence network model and the training data pairs. The memory 410 may be configured to store software, instructions, etc., for the method of training the artificial intelligence network model.

The processor 420 shown in FIG. 4 may be a general-purpose processor, or may be implemented as a combination of computing devices, such as one or more of a digital signal processor (DSP), central processing unit (CPU), graphics processing unit (GPU), and neural processing unit (NPU), among others. The memory 410 may comprise non-volatile memory for storing computer program code implementing the method of the present disclosure. The memory 410 may also comprise volatile cache memory for temporarily storing data received during processor execution and processed data. In one embodiment, when the training method in FIG. 3 is invoked from a remote server or cloud server to be executed on a local computing device, both the remote server or cloud server and the local computing device fall within the scope of the present disclosure.

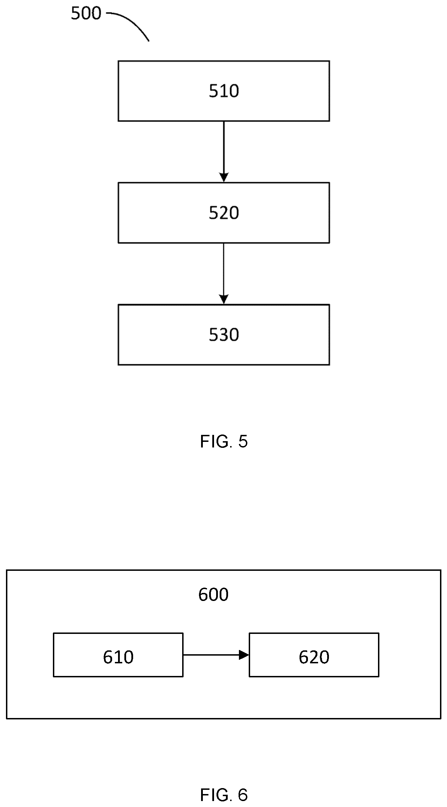

FIG. 5 is a flowchart of a method 500 for generating data based on an artificial intelligence network model according to an embodiment of the present disclosure. The method 500 can be performed by a computing device such as a (cloud) server, an edge computing platform, or a mobile phone, computer, or by components of such computing devices. Although some steps of the method 500 have been exemplarily described below in conjunction with FIGS. 1-2, the method 500 is not limited to the example of FIGS. 1-2.

At step 510, the method 500 may sample in the encoded latent space of the data pair consisting of first data and second data to obtain a latent space sample of the data pair, wherein there is a functional correspondence between the first data and the second data of the data pair, and one of the first data and the second data of the data pair is masked. In one embodiment, the latent space sample is obtained by sampling noise from a standard normal distribution in the latent space and adjusting the noise using the mean and variance of the normal distribution of the data pair in the latent space.

At step 520, the method 500 may decode the latent space sample of the data pair using an artificial intelligence network model to generate an output data pair consisting of a first output data and a second output data. In one embodiment, the first data and the first output data comprise design parameters, and the second data and the second output data comprise operating state parameters corresponding to the design parameters.

At step 530, the method 500 may filter the output data pair to obtain a target data pair where the first output data or the second output data satisfies predetermined conditions. In one embodiment, filtering the output data pair further comprises: filtering the output data pair based on the degree to which the first and second output data of the output data pair conform to a functional correspondence. In one embodiment, filtering the output data pair further comprises: selecting a subset of parameters from the first or second output data; and filtering the output data pair based on whether the values of the selected subset of parameters are within a threshold range of the target value.

In one embodiment, the artificial intelligence network model is trained through the following steps: generating a training dataset comprising multiple training data pairs, wherein the training data pairs comprise the first training data and the second training data have a functional correspondence; masking the first or second training data of the training data pairs to generate masked data pairs, wherein the masked data pairs comprise the data pairs with the first and second training data masked; and training the artificial intelligence network model by inputting the masked data pairs into the artificial intelligence network model and optimizing the loss between the reconstructed data pairs output by the artificial intelligence network model and the training data pairs. The training process and method of this artificial intelligence network model have been described in detail above with reference to FIGS. 1 and 3, and will not be repeated here.

FIG. 6 is a block diagram of an apparatus for generating data based on an artificial intelligence network model according to an embodiment of the present disclosure. As shown in FIG. 6, the apparatus 600may comprise a memory 610 and at least one processor 620 coupled to the memory 610.

In one embodiment, the apparatus 600 may be an apparatus for generating data based on an artificial intelligence network model, such as a local server, cloud server, edge computing platform, or even a smartphone or computer with strong computing power. The apparatus 600 may comprise various modules for generating data based on the artificial intelligence network model, and the processor 620 may be configured to execute the method for generating data based on the artificial intelligence network model described above in conjunction with FIG. 2. For example, the processor 620 may be configured to: sample in an encoded latent space of a data pair consisting of first data and second data to obtain a latent space sample of the data pair, wherein the first data and second data of the data pair have a functional correspondence, and one of the first data and second data of the data pair is masked; decode the latent space sample of the data pair using an artificial intelligence network model to generate an output data pair consisting of first output data and second output data; and filter the output data pair to obtain a target data pair in which the first output data or the second output data satisfies a predetermined condition. The memory 610 may be configured to store software, instructions, etc., for the method of generating data based on the artificial intelligence network model.

The processor 620 shown in FIG. 6 may be a general-purpose processor, or may be implemented as a combination of computing devices, such as one or more of a digital signal processor (DSP), central processing unit (CPU), graphics processing unit (GPU), and neural processing unit (NPU), among others. The memory 610 may comprise non-volatile memory for storing computer program code implementing the method of the present disclosure. The memory 610 may also comprise volatile cache memory for temporarily storing data received during processor execution and processed data. In one embodiment, when the training method in FIG. 1 is invoked from a remote server or cloud server to be executed on a local computing device, both the remote server or cloud server and the local computing device fall within the scope of the present disclosure.

The various operations described in conjunction with this disclosure may be performed with hardware, software executed by a processor, firmware, or any combination thereof. In one embodiment, the present disclosure provides a computer program product for training an artificial intelligence network model, which may comprise processor-executable computer program code for performing the method described above in conjunction with FIG. 3. In another embodiment, the present disclosure further provides a computer-readable medium, which may store the above-mentioned computer program code. When executed by a processor, this computer program code enables the processor to perform the method described above in conjunction with FIG. 3. In one embodiment, the present disclosure provides a computer program product for generating data based on an artificial intelligence network model, which may comprise processor-executable computer program code for performing the method described above in conjunction with FIG. 5. In another embodiment, the present disclosure further provides a computer-readable medium, which may store the above-mentioned computer program code. When executed by a processor, this computer program code enables the processor to perform the method described above in conjunction with FIG. 5. Computer-readable media include both non-transitory computer storage media and communication media. Communication media include any medium that facilitates the transfer of a computer program from one place to another. Any connection may be appropriately referred to as a computer-readable medium. Other examples and implementations are within the scope of the present disclosure.

Although the examples in FIGS. 1 and 2, and the methods in FIGS. 3 and 5, are described separately, these examples and methods can be combined depending on the specific implementation. The above combinations are provided only as examples, and the present invention may also include other combinations of different examples or methods depending on the specific implementation.

As used herein, the terms "component," "system," "unit," "module," etc., include computer-related entities such as, but not limited to, hardware, firmware, combinations of hardware and software, software, or software in execution configured to perform a particular operation or function. For example, a component can be, but is not limited to, a process running on a processor, a processor, an object, an executable program, a thread of execution, a program, and/or a computer. By way of illustration, both an application running on a communication device and the communication device itself can be referred to as a component. One or more components may reside within a process and/or a thread of execution, and components may reside on a single processor or core and/or be distributed across two or more processors or cores. Furthermore, these components can be executed from various non-transitory computer-readable media having various instructions and/or data structures stored thereon. Components can communicate via local and/or remote processes, function or procedure calls, electronic signals, data packets, memory read/write, and other known computer, processor, and/or process-related communication methods.

The ordinal numbers such as "first" and "second" described in the present invention are merely distinguishing designations for certain elements and are not intended to limit the order of certain elements or to limit the importance or preference of certain elements. Furthermore, as described herein, terms such as "configured as" or "operable as" can be used interchangeably, and when used, indicate that the entity performing the operation has the capability to perform or is "configured as" or "operable as" certain operations. The examples or methods provided in FIGS. 1 through 6 are not intended to limit the scope, applicability, or examples set forth in the claims. Changes may be made to the function and arrangement of the elements discussed without departing from the scope of the present invention. Various processes or components may be omitted, substituted, or added as appropriate in the examples. For example, the described methods may be performed in a different order than that described, and steps may be added, omitted, or combined. Furthermore, some of the features described in the examples can be combined with other examples. For example, an apparatus or method can be implemented using any number of aspects set forth herein. Additionally, the scope of protection of the present invention is intended to cover apparatuses or methods practiced using structures, functions, or structures and functions other than those set forth herein or different from those set forth herein. It should be understood that any aspect of what is disclosed herein may be embodied by one or more elements of the claims. The word "exemplary" as used herein means "serving as an example, instance, or illustration." Any aspect described herein as "exemplary" is not necessarily to be construed as preferred or advantageous over other aspects.

The various illustrative logic blocks, modules, and circuits described in connection with the present invention may be implemented or executed using a general-purpose processor, digital signal processor (DSP), application-specific integrated circuit (ASIC), field-programmable gate array (FPGA) or other programmable logic device (PLD), discrete gate or transistor logic, discrete hardware components, or any combination thereof designed to perform the functions described herein. The general-purpose processor may be a microprocessor, but alternatively, the processor may be any commercially available processor, controller, microcontroller, or state machine. The processor may also be implemented as a combination of computing devices, such as a combination of a DSP and a microprocessor, multiple microprocessors, one or more microprocessors combined with a DSP core, or any other such configuration.

If implemented in hardware, an example hardware configuration may comprise a processing controller in a wireless node. The processing controller may be implemented using a bus architecture. Depending on the specific application and overall design constraints of the processing controller, the bus may comprise any number of interconnected buses and bridges. The bus can link together various circuits, including processors, machine-readable media, and bus interfaces. The bus may also link various other circuits such as clock sources, peripherals, regulators, power management circuits, etc., which are well known in the art and therefore will not be described further. The processor may be implemented using one or more general-purpose processors and/or special-purpose processors. Examples include microprocessors, microcontrollers, DSP processors, and other circuits capable of executing software. Those skilled in the art will recognize that how best to implement the functions described for the processing controller depends on the specific application and the overall design constraints imposed on the controller.

If implemented in software, functionality can be stored or transmitted as one or more instructions or code on or through a computer-readable medium. Software should be broadly interpreted as instructions, data, or any combination thereof, whether referred to as software, firmware, middleware, microcode, hardware description language, or other terms. Computer-readable media includes computer storage media and communication media, wherein the communication media includes any medium that facilitates the transfer of a computer program from one place to another. The processor may be responsible for managing the bus and general-purpose processing, including the execution of software modules stored on the computer-readable storage medium. The computer-readable storage medium may be coupled to the processor so that the processor can read information from and write information to the storage medium. Alternatively, the storage medium may be integrated into the processor. For example, a machine-readable medium may include a transmission line, a carrier wave modulated by data, and/or a computer-readable storage medium separate from the wireless node on which instructions are stored, all of which may be accessible to the processor via a bus interface. Alternatively or additionally, the machine-readable medium or any portion thereof may be integrated into the processor, such as in cases where it may have a cache and/or a general-purpose register file. For example, examples of computer-readable storage media may include RAM (Random Access Memory), flash memory, ROM (Read-Only Memory), PROM (Programmable Read-Only Memory), EPROM (Erasable Programmable Read-Only Memory), EEPROM (Electrically Erasable Programmable Read-Only Memory), registers, disks, optical disks, hard disks, high-bandwidth memory (HBM) suitable for artificial intelligence technologies, computing-in memory (CIM), or any other suitable storage media or any combination thereof. Machine-readable media may be embodied in computer program products.

Software modules may comprise a single instruction or a number of instructions, and may be distributed across several different code segments, across different programs, or across multiple storage media. Computer-readable media may comprise multiple software modules. When executed by a device such as a processor, a software module comprises instructions that cause the processing controller to perform various functions. Software modules may comprise sending modules and receiving modules. Software modules may reside on a single storage device or be distributed across multiple storage devices. For example, when a triggering event occurs, a software module may be loaded from a hard disk into RAM. During the execution of a software module, the processor may load some of these instructions into a cache to speed up access. Subsequently, one or more cache lines may be loaded into a general-purpose register file for execution by the processor. When referring to the functionality of a software module as described below, it will be understood that such functionality is implemented by the processor when instructions from that software module are executed.

Certain aspects described herein may include a computer program product for performing the operations set forth herein. For example, such a computer program product may comprise computer-readable media having instructions stored thereon (and/or encoded thereon), and the instructions being executable by one or more processors to perform the operations described herein.

It is to be understood that the claims are not limited to the precise configurations and components described above. Various modifications, alterations, and variations may be made to the arrangement, operation, and details of the method and apparatus described above without departing from the scope of the claims.

## Claims

1. A method for generating data based on an artificial intelligence network model, comprising:
sampling in the encoded latent space of a data pair consisting of first data and second data to obtain a latent space sample of the data pair, wherein the first data and second data of the data pair have a functional correspondence, and one of the first data and the second data of the data pair is masked;
decoding the latent space sample of the data pair using the artificial intelligence network model to generate an output data pair consisting of first output data and second output data; and
filtering the output data pair to obtain a target data pair in which either the first output data or the second output data satisfies a predetermined condition.

2. The method according to claim 1, wherein at least one of the first training data and the second training data comprises text data, image data, audio data, or video data.

3. The method according to claim 1, wherein the latent space sample is obtained by sampling noise from a standard normal distribution in the latent space and adjusting the noise using the mean and variance of the normal distribution of the data pair in the latent space.

4. The method according to claim 1, wherein the first data and the first output data comprise design parameters, and the second data and the second output data comprise operating state parameters corresponding to the design parameters.

5. The method according to claim 1, wherein filtering the output data pair further comprises: filtering the output data pair based on the degree to which the first output data and the second output data of the output data pair conform to the function correspondence.

6. The method according to claim 1, wherein filtering the output data pair further comprises:
selecting a subset of parameters from the first output data or the second output data; and
filtering the output data pair based on whether the values of the selected subset of parameters are within a threshold range of a target value.

7. The method according to claim 1, wherein the artificial intelligence network model is trained by:
generating a training dataset comprising multiple training data pairs, the training data pairs comprising first training data and second training data having a functional correspondence;
masking the first training data or the second training data of the training data pairs to generate masked data pairs, the masked data pairs comprising a data pair with the first training data masked and a data pair with the second training data masked; and
training the artificial intelligence network model by inputting the masked data pairs into the artificial intelligence network model and optimizing the loss between the reconstructed data pairs output by the artificial intelligence network model and the training data pairs.

8. The method according to claim 7, wherein masking the first training data or the second training data of the training data pair comprises: replacing the first training data or the second training data with values of random noise, normally distributed values, or preset values.

9. The method according to claim 7, wherein masking the first training data or the second training data of the training data pair comprises: randomly masking the first training data or the second training data of the training data pair.

10. The method according to claim 7, wherein the artificial intelligence network model comprises an encoder and a decoder.

11. The method according to claim 10, wherein training the artificial intelligence network model further comprises:
encoding the masked data pair using the encoder to obtain a compressed low-dimensional representation of the masked data pair in the latent space;
decoding the compressed low-dimensional representation of the masked data pair using the decoder to generate the reconstructed data pair, the reconstructed data pair comprising reconstructed first training data and reconstructed second training data;
calculating the loss between the reconstructed data pair and the training data pair; and
adjusting the model parameters of the artificial intelligence network model based on the loss.

12. The method according to claim 11, wherein the loss comprises a reconstruction loss between the reconstructed data pair and the training data pair, a Kullback-Leibler (KL) loss, and a physical loss.

13. The method according to claim 12, wherein,
the reconstruction loss comprises: the mean squared error (MSE) between the first training data and the reconstructed first training data, and the MSE between the second training data and the reconstructed second training data, and
wherein, the physical loss comprises: the difference between the correlation function of the training data pair and the correlation function of the reconstructed data pair.

14. The method according to claim 12, wherein the output data pair, the training data pair, and the reconstructed data pair comprise image data, and wherein the loss further comprises a Fast Fourier Transform (FFT) loss, the FFT loss comprising: the MSE between the FFT-processed training data pair and the FFT-processed reconstructed data pair.

15. An apparatus for generating data based on an artificial intelligence network model, comprising:
a memory; and
at least one processor coupled to the memory and configured to perform the method according to any one of claims 1-14.

16. A computer program product for generating data based on an artificial intelligence network model, comprising computer-executable instructions that, when executed, cause one or more processors to perform the method according to any one of claims 1-14.
